(19) Europäisches Patentamt
European Patent Office
Office européen des brevets

(11) EP 4 495 531 A1

(12) **EUROPEAN PATENT APPLICATION**
published in accordance with Art. 153(4) EPC

(43) Date of publication:
**22.01.2025 Bulletin 2025/04**

(21) Application number: 24765930.3

(22) Date of filing: **06.06.2024**

(51) International Patent Classification (IPC):
**F28F 3/08** (2006.01) **B23K 20/00** (2006.01)
**F28D 9/02** (2006.01)

(52) Cooperative Patent Classification (CPC):
**F28D 9/0062; B23K 20/023;** F28F 3/025;
F28F 2275/02; F28F 2275/045

(86) International application number:
**PCT/JP2024/020759**

(87) International publication number:
**WO 2024/253170 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.06.2023 JP 2023093232**

(71) Applicant: **Daikin Industries, Ltd.
Osaka 530-0001 (JP)**

(72) Inventors:
• **UKAI, Takuya**
 **Osaka-shi, Osaka 530-0001 (JP)**
• **MIYAMOTO, Kenji**
 **Osaka-shi, Osaka 530-0001 (JP)**
• **ITO, Masatoshi**
 **Osaka-shi, Osaka 530-0001 (JP)**
• **SUSA, Toshihiro**
 **Osaka-shi, Osaka 530-0001 (JP)**

(74) Representative: **Hoffmann Eitle
Patent- und Rechtsanwälte PartmbB
Arabellastraße 30
81925 München (DE)**

(54) **HEAT EXCHANGER AND METHOD FOR MANUFACTURING HEAT EXCHANGER**

(57)     There is provided a method of manufacturing a heat exchanger including a plurality of layer members (110) and a partition wall member (120), the plurality of layer members (110) each includes a flow passage member (111) and a spacer member (112) that is disposed on a side of the flow passage member (111) in a perpendicular direction perpendicular to a stacking direction (V1) of the layer members (110). The method of manufacturing the heat exchanger includes a step of bonding the flow passage member (111), the spacer member (112), and the partition wall member (120) together. At least one of the flow passage member (111) and the spacer member (112) is deformed by the bonding to reduce a dimensional difference in the stacking direction (V1) between the flow passage member (111) and the spacer member (112) adjacent to each other in the perpendicular direction.

FIG.1

**Description**

Technical Field

The present disclosure relates to a heat exchanger and a method of manufacturing a heat exchanger.

Background Art

PTL 1 discloses a heat exchanger. The heat exchanger in PTL 1 has a structure in which a plurality of stages of fluid passages are formed by tube plates (partition wall members) that are stacked on each other with a pair of spacer bars (spacer members) interposed therebetween. In each fluid passage, a corrugated fin (flow passage member) is disposed along a direction of flow in the fluid passage.

Citation List

Patent Literature

PTL 1: Japanese Unexamined Utility Model Registration Application Publication No. 4-63989

Summary of Invention

Technical Problem

As a method of manufacturing a heat exchanger, for example, there is a method in which constituent members of the heat exchanger are bonded together by brazing. However, there is a possibility that a difference of about several tens micrometers in height is generated among the constituent members in layers in the heat exchanger due to variations of thicknesses and press molding of roll materials used as materials of the heat exchanger. Due to this height difference, a space between bonded surfaces of constituent members of the heat exchanger may be not filled with a brazing material, which causes a gap between the bonded surfaces and causes a bonding defect.

An object of the present disclosure is to provide a method of manufacturing a heat exchanger, the method enabling effective bonding of constituent members of the heat exchanger.

Solution to Problem

A first aspect is a method of manufacturing a heat exchanger, the heat exchanger including a plurality of layer members (110) stacked on each other and a partition wall member (120) disposed between the layer members (110) that are adjacent to each other, the plurality of layer members (110) each including a flow passage member (111) configured to form a flow passage for a refrigerant and a spacer member (112) disposed on a side of the flow passage member (111) in a perpendicular direction perpendicular to a stacking direction (V1) of the layer members (110). The method of manufacturing the heat exchanger includes a bonding step of bonding the flow passage member (111), the spacer member (112), and the partition wall member (120) together, and at least one of the flow passage member (111) and the spacer member (112) is deformed by the bonding to reduce a dimensional difference in the stacking direction (V1) between the flow passage member (111) and the spacer member (112) that are adjacent to each other in the perpendicular direction.

It is possible in the first aspect to effectively bond constituent members of the heat exchanger together.

A second aspect is the first aspect in which the flow passage member (111), the spacer member (112), and the partition wall member (120) are bonded together in the bonding step by diffusion bonding.

It is possible in the second aspect to manufacture the heat exchanger easily.

A third aspect is the second aspect in which a dimension of the flow passage member (111) is larger than a dimension of the spacer member (112) in the stacking direction (V1) before the diffusion bonding, and the flow passage member (111) is deformed by the diffusion bonding to reduce the dimension of the flow passage member (111) in the stacking direction (V1).

It is possible in the third aspect to absorb a dimensional difference between the flow passage member (111) and the spacer member (112) by deforming the flow passage member (111).

A fourth aspect is the second or third aspect in which a surface pressure at a point of contact between the partition wall member (120) immediately after the diffusion bonding and the flow passage member (111) is 1 MPa or more.

It is possible in the fourth aspect to bond the partition wall member (120) and the flow passage member (111) to each other such that the surface pressure at the point of contact between the partition wall member (120) immediately after the diffusion bonding and the flow passage member (111) is 1 MPa or more.

A fifth aspect is any one of the second to fourth aspects in which the flow passage member (111) has a triangular shape, a trapezoidal shape, a circular shape, or a sinusoidal shape in a cross-sectional view, and the flow passage member is deformed by being pressurized in the diffusion bonding.

It is possible in the fifth aspect to diffusion-bond the flow passage member (111), the spacer member (112), and the partition wall member (120) together by plastically deforming the flow passage member (111).

A sixth aspect is any one of the second to fifth aspects in which the flow passage member (111) is bonded at a plurality of bonding portions (YA) to the partition wall member (120) that is one partition wall member by the diffusion bonding, the plurality of bonding portions (YA) are arranged along the perpendicular direction to be spaced from each other, and, when, after the diffusion bonding, a dimension of the bonding portions (YA) in the perpendicular direction, the bonding portions (YA) being adjacent to each other, is P and a dimension of the flow passage member (111) in the stacking direction (V1) is h, a relationship of $(2/5)P < h < (2/3)P$ or $(2/5)h < P < (2/3)h$ is established.

It is possible in the sixth aspect to design the flow passage member (111) such that the relationship of $(2/5)P < h < (2/3)P$ or $(2/5)h < P < (2/3)h$ is established.

A seventh aspect is any one of the second to sixth aspects in which the flow passage member (111) is formed such that a certain unit shape is repeatedly arranged along the perpendicular direction, the flow passage member (111) is bonded at a plurality of bonding portions (YA) to the partition wall member (120) that is one partition wall member by the diffusion bonding, the plurality of bonding portions (YA) are arranged along the perpendicular direction to be spaced from each other, and, when, before the diffusion bonding, a length of a half of the unit shape in a cross-sectional view of a flow passage (R) formed by the flow passage member (111) is L, a dimension of the flow passage member (111) in the stacking direction (V1) is H and when, after the diffusion bonding, a dimension of the flow passage member (111) in the stacking direction (V1) is h, a dimension of each one of the bonding portions (YA) in the perpendicular direction is a, a dimension of the bonding portions (YA) adjacent to each other in the perpendicular direction is P and $0 < a \leq P/2$ is established, a difference $\Delta (H - h)$ between the dimension H of the flow passage member

(111) in the stacking direction (V1) before the diffusion bonding and the dimension h of the flow passage member (111) in the stacking direction (V1) after the diffusion bonding establishes a relationship of Math. 1 below.

(Math. 1)

$$\Delta (H - h) > L - (P/2) - \sqrt{\{(L - 2a + P/2)(L - P/2)\}}$$

It is possible in the seventh aspect to design the flow passage member (111) such that the relationship of $\Delta (H - h) > L - (P/2) - \sqrt{\{(L - 2a + P/2)(L - P/2)\}}$ is established.

An eighth aspect is a method of manufacturing a heat exchanger, the heat exchanger including a plurality of layer members (110) stacked on each other and a partition wall member (120) disposed between the layer members (110) that are adjacent to each other, the plurality of layer members (110) each including a flow passage member (111) configured to form a flow passage for a refrigerant and a spacer member (112), a plurality of the flow passage members (111) each including a first portion (1111) disposed on a side of the spacer member (112) in a direction perpendicular to a stacking direction (V1) of the layer members (110) and a second portion (1112) sandwiched between the spacer member (112) and the partition wall member (120). The method of manufacturing the heat exchanger includes a bonding step of bonding the flow passage members (111), the spacer member (112), and the partition wall member (120) together, and at least one of the flow passage members (111) and the spacer member (112) is deformed by the bonding to reduce a dimensional difference in the stacking direction (V1) between a first member and a second member that are adjacent to each other in the perpendicular direction, the first member corresponds to the first portion (1111) of the flow passage member (111), and the second member corresponds to the spacer member (112) and the second portion (1112) of the flow passage member (111).

It is possible in the eighth aspect to effectively bond constituent members of the heat exchanger together.

A ninth aspect is any one of the first to eighth aspects in which the refrigerant contains propane.

It is possible in the ninth aspect to cause the refrigerant containing the propane to flow through the flow passage of the heat exchanger.

A tenth aspect is any one of the second to eighth aspects in which a dimension of the flow passage member (111) before the diffusion bonding in the stacking direction (V1) is 2 mm or less.

It is possible in the tenth aspect to downsize the heat exchanger.

An eleventh aspect is any one of the first to third aspects in which an apparent Young's modulus of the flow passage member (111) is smaller than a Young's modulus of the spacer member (112).

It is possible in the eleventh aspect to bond the flow passage member (111) and the spacer member (112) to the partition wall member (120) such that a dimensional difference in the stacking direction (V1) between the flow passage member (111) and the spacer member (112) is reduced.

A twelfth aspect is any one of the first to third aspects and the eleventh aspect in which the flow passage member (111) is made of a foamed material.

It is possible in the twelfth aspect to reduce an apparent Young's modulus of the flow passage member (111) by forming the flow passage member (111) with a foamed material.

A thirteenth aspect is any one of the first to third aspects, the eleventh aspect, and the twelfth aspect in which the flow passage member (111) includes a floor portion (IIIe) and a projecting portion (IIId) projecting from the floor portion (IIIe), and a dimension of the projecting portion (IIId) is smaller than a dimension of the floor portion (IIIe) in the perpendicular direction.

It is possible in the thirteenth aspect to form the flow passage (R) for the refrigerant in a space surrounded by the floor portion (IIIe) and the projecting portion (IIId).

A fourteenth aspect is any one of the first to third aspects and the eleventh to thirteenth aspects in which the flow passage member (111) has a hole (111da).

It is possible in the fourteenth aspect to reduce an apparent Young's modulus of the flow passage member (111) by forming the hole (111da) in the flow passage member (111).

A fifteenth aspect is the thirteenth aspect in which a portion of the projecting portion (IIId) is thinner than another portion of the projecting portion (IIId).

It is possible in the fifteenth aspect to reduce an apparent Young's modulus of the flow passage member (111) by thinning a portion of the projection portion (IIId).

A sixteenth aspect is the thirteenth aspect in which areas of cross-sections of the projecting portion (IIId) perpendicular to the stacking direction (V1) are varied.

It is possible in the sixteenth aspect to reduce an apparent Young's modulus of the flow passage member (111) by varying the areas of cross-sections of the projecting portion (IIId).

A seventeenth aspect is any one of the first to third aspects and the eleventh to sixteenth aspects in which a material of the flow passage member (111) is different from a material of the spacer member (112).

It is possible in the seventeenth aspect to make the material of the flow passage member (111) be different from the material of the spacer member (112) to reduce the apparent Young's modulus of the flow passage member (111).

An eighteenth aspect is any one of the thirteenth aspect, the fifteenth aspect, and the sixteenth aspect in which a plurality of the projecting portions (IIId) project from the floor portion (IIIe) toward one side (V11) in the stacking direction (V1), the floor portion (IIIe) is bonded to the partition wall member (120) adjacent on another side (V12) in the stacking direction (V1) to the floor portion (IIIe), the plurality of projecting portions (IIId) are arranged along the perpendicular direction to be spaced from each other and are bonded to the partition wall member (120) adjacent on the one side (V11) in the stacking direction (V1) to the plurality of projecting portions (111d), and a flow passage (R) for a refrigerant is formed among the projecting portions (IIId) adjacent to each other, the floor portion (IIIe), and the partition wall member (120) adjacent on the one side (V11) in the stacking direction (V1) to the projecting portions (IIId).

It is possible in the eighteenth aspect to reduce an apparent Young's modulus of the flow passage member (111) by thinning the plurality of projecting portions (IIId) to form the flow passage (R) for the refrigerant between the projecting portions (IIId) adjacent to each other.

A heat exchanger in a nineteenth aspect is manufactured by the method of manufacturing the heat exchanger in any one of the first to eighteenth aspects.

It is possible in the nineteenth aspect to effectively bond constituent members of the heat exchanger together.

Brief Description of Drawings

[Fig. 1] Fig. 1 is a perspective view illustrating part of a heat exchanger according to a first embodiment.
[Fig. 2] Fig. 2 is an exploded perspective view of the heat exchanger illustrated in Fig. 1.
[Fig. 3] Fig. 3 is a perspective view illustrating a state in which a pipe member is fixed to an outer surface of a heat exchanger.
[Fig. 4] Fig. 4(a) is a plan view of a first plate member. Fig. 4(b) is a plan view of a second plate member.
[Fig. 5] Fig. 5(a) is a plan view of a first spacer member. Fig. 5(b) is a plan view of a second spacer member.
[Fig. 6] Fig. 6 is a plan view of a partition wall member.
[Fig. 7] Fig. 7 is a plan view illustrating a state in which a pipe member is fixed to an outer surface of a heat exchanger.
[Fig. 8] Fig. 8(a) and Fig. 8(b) are cross-sectional views each illustrating a refrigerant that flows through a flow passage member.
[Fig. 9] Fig. 9(a) is a cross-sectional view illustrating constituent members of a heat exchanger before diffusion bonding. Fig. 9(b) is a cross-sectional view illustrating constituent members of the heat exchanger after diffusion bonding.
[Fig. 10] Fig. 10(a) is a cross-sectional view illustrating constituent members of a heat exchanger before diffusion bonding. Fig. 10(b) is a cross-sectional view illustrating a first example of constituent members of a heat exchanger after diffusion bonding. Fig. 10(c) is a cross-sectional view illustrating a second example of constituent members of a heat exchanger after diffusion bonding.

[Fig. 11] Fig. 11(a) to Fig. 11(c) are diagrams illustrating modifications of a flow passage member.

[Fig. 12] Fig. 12 is a partial cross-sectional view illustrating a modification of a heat exchanger.

[Fig. 13] Fig. 13(a) is a perspective view illustrating a modification of a layer member and a partition wall member before diffusion bonding. Fig. 13(b) is a perspective view illustrating a modification of a layer member and a partition wall member after diffusion bonding.

[Fig. 14] Fig. 14 is a cross-sectional view of a heat exchanger according to a second embodiment.

[Fig. 15] Fig. 15(a) is a cross-sectional view illustrating a flow passage member, a spacer member, and a partition wall member before bonding of the partition wall member to the flow passage member and the spacer member. Fig. 15(b) is a cross-sectional view illustrating a flow passage member, a spacer member, and a partition wall member after bonding of the partition wall member to the flow passage member and the spacer member.

[Fig. 16] Fig. 16(a) is a cross-sectional view illustrating a second modification of a flow passage member. Fig. 16(b) is a cross-sectional view illustrating a third modification of a flow passage member. Fig. 16(c) is a cross-sectional view illustrating a fourth modification of a flow passage member.

Description of Embodiments

Hereinafter, embodiments of the present disclosure will be described in detail with reference to the drawings. Note that the present disclosure is not limited to the embodiments described below and can be variously changed in a range not departing from the technical idea of the present disclosure. Since the drawings are intended to conceptually describe the present disclosure, dimensions, ratios, or the number may be exaggerated or simplified, as necessary, for ease of understanding. In each of embodiments, modifications, and the drawings, identical or corresponding parts are denoted by identical reference signs, and detailed description thereof and description of effects and the like associated therewith will not be repeated.

(1) First Embodiment

A heat exchanger (1) according to the first embodiment is a device in which heat is exchanged among a plurality of fluids. The heat exchanger (1) is made of, for example, a metallic material, such as stainless steel or aluminum.

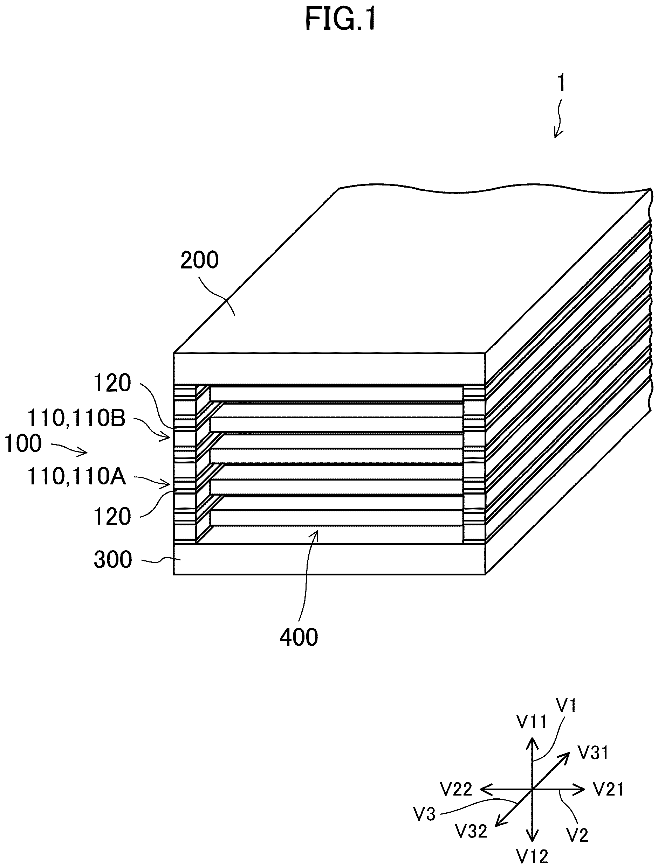

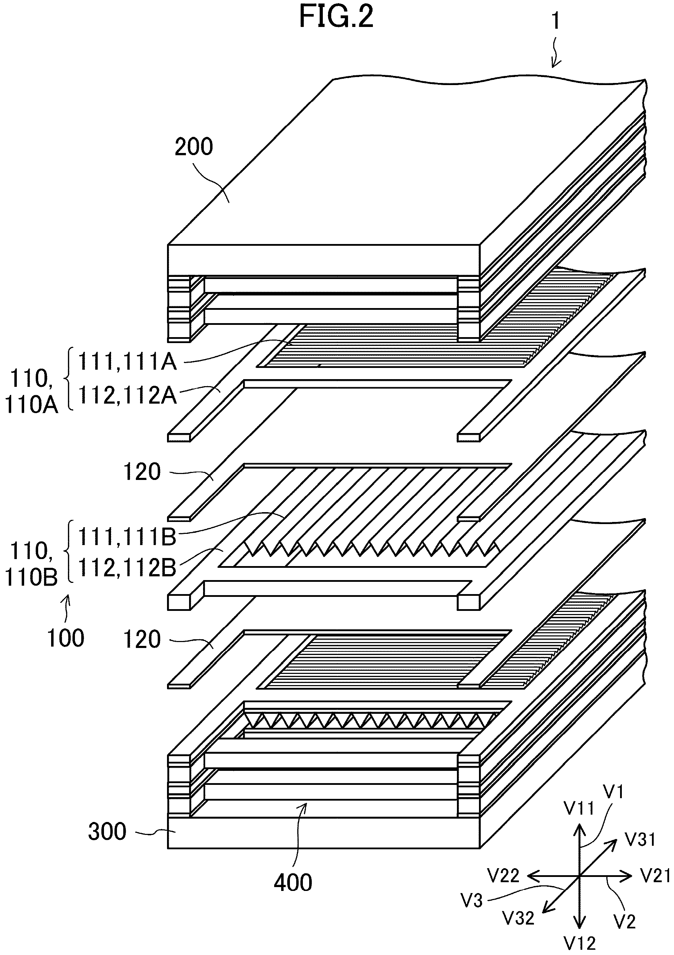

As illustrated in Fig. 1 and Fig. 2, the heat exchanger (1) includes a laminate (100), a first plate member (200), and a second plate member (300).

(1-1) Overall Configuration

The laminate (100) includes a plurality of layer members (110) and a partition wall member (120). The plurality of layer members (110) are stacked on each other along a first direction (V1). The first direction (V1) corresponds to a stacking direction of the layer members (110). Each of the plurality of layer members (110) includes a flow passage member (111) and a spacer member (112).

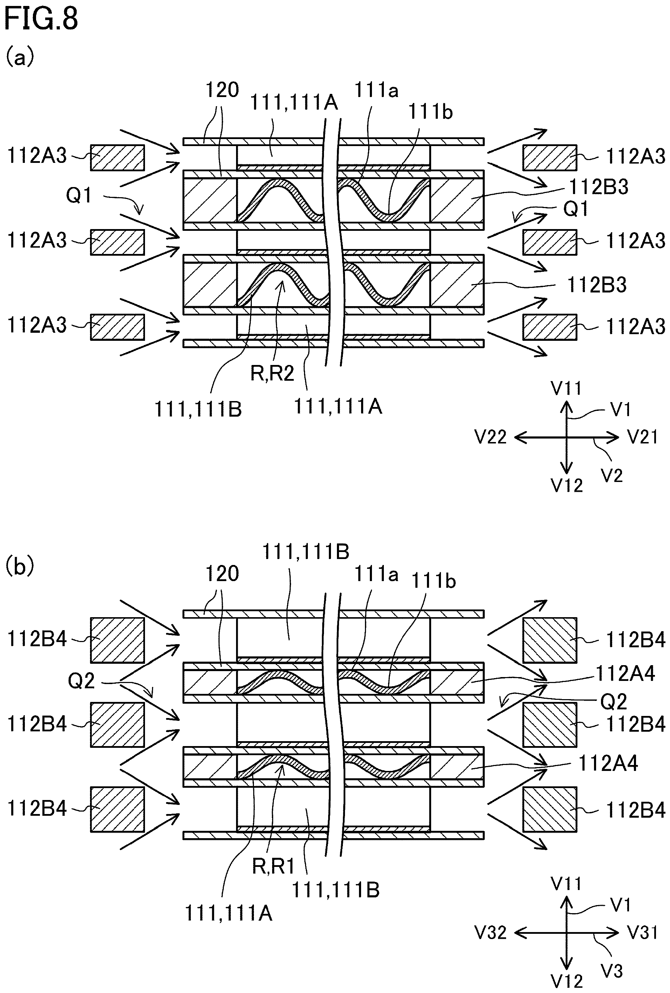

The flow passage member (111) forms a flow passage for a refrigerant. The flow passage member (111) is, for example, a fin. The flow passage member (111) includes a mountain portion (111a) protruding toward one side (V11) in the first direction (V1) and a valley portion (111b) protruding toward another side (V12) in the first direction (V1). The flow passage member (111) has a corrugated plate shape in which the mountain portion (111a) and the valley portion (111b) are alternately arranged (see Fig. 8(a) and Fig. 8(b)).

The spacer member (112) ensures an installation space for the flow passage member (111). The spacer member (112) is disposed on a side of the flow passage member (111) in a direction perpendicular to the first direction (V1) (the stacking direction of the layer members (110)). In the present embodiment, a second direction (V2) and a third direction (V3) are defined as directions perpendicular to the first direction (V1). The first direction (V1), the second direction (V2), and the third direction (V3) are directions perpendicular to each other.

In the present embodiment, the plurality of layer members (110) include two types of layer members. The two types of layer members include a first layer member (110A) and a second layer member (110B). The first layer member (110A) and the second layer member (110B) are alternately disposed along the first direction (V1). Note that the plurality of layer members (110) may include three or more types of layer members, and the three or more types of layer members may be sequentially and repeatedly disposed along the first direction (V1).

Hereinafter, the flow passage member (111) of the first layer member (110A) may be referred to as a first flow passage member (111A), and the flow passage member (111) of the second layer member (110B) may be referred to as a second flow passage member (111B). In addition, the spacer member (112) of the first layer member (110A) may be referred to as a first spacer member (112A), and the spacer member (112) of the second layer member (110B) may be referred to as a second spacer member (112B).

The mountain portion (111a) and the valley portion (111b) of the first flow passage member (111A) extend along the third direction (V3). The first flow passage member (111A) sends a refrigerant along the third direction (V3). The mountain portion (111a) and the valley portion (111B) of the second flow passage member (111B) extend along the second direction (V2). The second flow passage member (111B) sends a refrigerant along the second direction (V2). In the present embodiment, the first flow passage member (111A) and the second flow passage member (111B) send refrigerants in directions perpendicular to each other. The direction in which a refrigerant is sent by the first flow passage member (111A) of the first layer member (110A) and the direction in which a refrigerant is sent by the second flow passage member (111B) are not limited.

The first flow passage member (111A) and the second flow passage member (111B) send different types of refrigerants. In the present embodiment, one of the first flow passage member (111A) and the second flow passage member (111B) sends propane as a refrigerant, and the other flow passage member sends water as a refrigerant. Note that one of the first flow passage member (111A) and the second flow passage member (111B) may send propane as a refrigerant while the other flow passage member sends $CO_2$ as a refrigerant. In addition, one of the first flow passage member (111A) and the second flow passage member (111B) may send water as a refrigerant while the other flow passage member sends $CO_2$ as a refrigerant.

The flow passage member (111) forms a flow passage (R) through which a refrigerant flows. Hereinafter, a refrigerant that flows through a first flow passage (R1) formed by the first flow passage member (111A) may be referred to as a first refrigerant, and a refrigerant that flows through a second flow passage (R2) formed by the second flow passage member (111B) may be referred to as a second refrigerant. The first flow passage (R1) extends along the second direction (V2). The second flow passage (R2) extends along the third direction (V3).

The partition wall member (120) is a flat plate-shaped member. The partition wall member (120) is disposed between the layer members (110) that are adjacent to each other. In the present embodiment, the partition wall member (120) is disposed between the first layer member (110A) and the second layer member (110B).

The first plate member (200) is a flat plate-shaped member. The first plate member (200) faces the laminate (100) from the one side (V11) in the first direction (V1). The first plate member (200) is located furthest on the one side (V11) (the uppermost stage) in the first direction (V1).

The second plate member (300) is a flat plate-shaped member. The second plate member (300) faces the laminate (100) from the other side (V12) in the first direction (V1). The second plate member (300) is located furthest on the other side (V12) (the lowermost stage) in the first direction (V1).

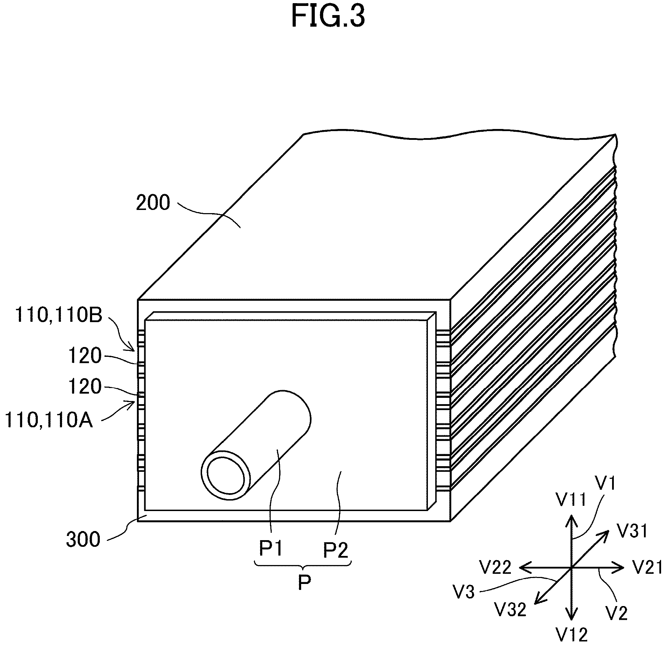

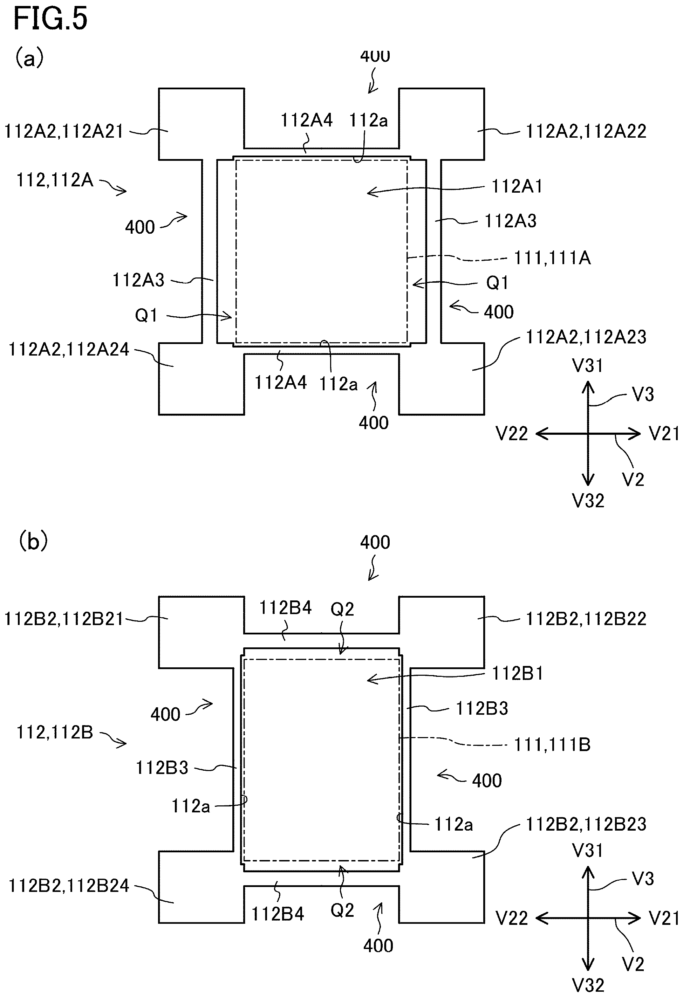

As illustrated in Fig. 3, a pipe member (P) is fixed to an outer surface of the heat exchanger (1). The pipe member (P) is fixed to the outer surface of the heat exchanger (1) by, for example, welding (TIG welding). The pipe member (P) includes a refrigerant pipe (P1) and a plate-shaped portion (P2). The refrigerant pipe (P1) is a tubular member for sending a refrigerant. The plate-shaped portion (P2) is a plate-shaped member and is fixed to an outer surface of the heat exchanger (1). The refrigerant pipe (P1) is provided on the plate-shaped portion (P2). The plate-shaped portion (P2) has a hole through which a refrigerant passes, and the hole is in communication with the inside of the refrigerant pipe (P1) and faces the heat exchanger (1). A refrigerant is sent to the heat exchanger (1) through the refrigerant pipe (P1). In the present embodiment, a concave portion (400) is provided at a place on the outer surface of the heat exchanger (1) where the layer members (110) and the partition wall member (120) are located, the pipe member (P) is fixed to an edge portion of the concave portion (400), and the refrigerant pipe (P1) is configured to be in communication with a space between the outer surface of the heat exchanger (1) and the concave portion (400) (see Fig. 5(a) to Fig. 6). In the heat exchanger (1), four pipe members (P) are provided in total one each on two sides in the second direction (V2) and two sides in the third direction (V3). In Fig. 1 to Fig. 3(b), only one pipe member (P) is provided, and illustration of the remaining three concave portions (400) and the refrigerant pipe (P1) is omitted. Note that the heat exchanger (1) may be not provided with the concave portions (400) and may be not provided with the pipe members (P).

(1-2) Constituent Members of Heat Exchanger

(1-2-1) First Plate Member

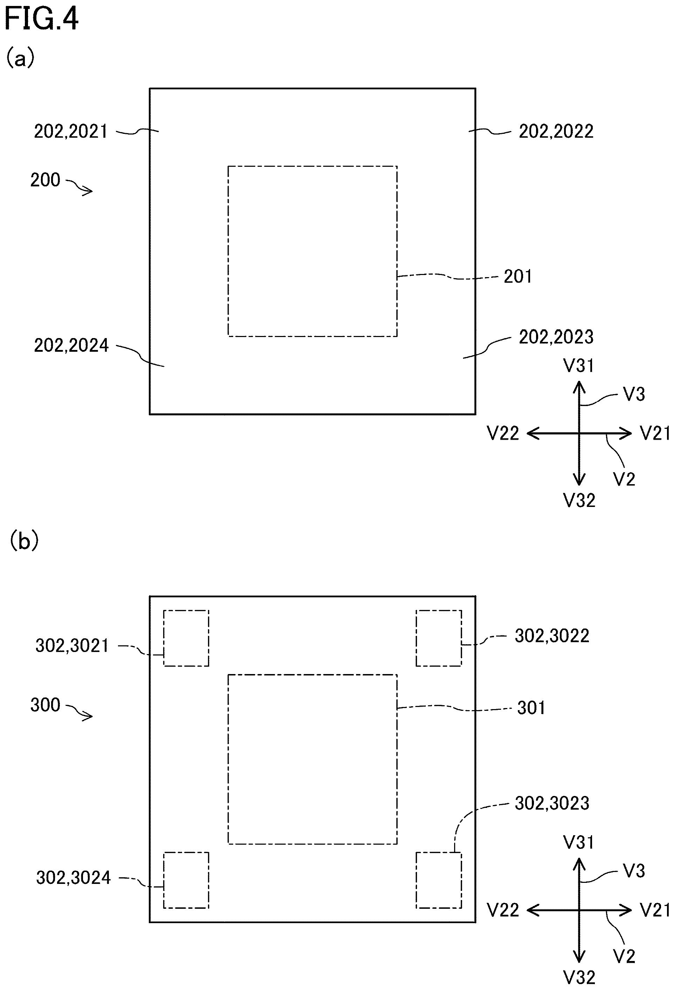

As illustrated in Fig. 4(a), the first plate member (200) includes a facing portion (201) and a corner portion (202). The facing portion (201) faces the flow passage member (111). The facing portion (201) is provided at a central portion of the first plate member (200). The corner portion (202) includes a first corner portion (2021) to a fourth corner portion (2024), which are provided one each at four corners of the first plate member (200).

(1-2-2) Second Plate Member

As illustrated in Fig. 4(b), the second plate member (300) includes a facing member (301) and a corner portion (302). The facing portion (301) faces the flow passage member (111). The facing portion (301) is provided at a central portion of the second plate member (300). The corner portion (302) includes a first corner portion (3021) to a fourth corner portion (3024), which are provided one each at four corners of the second plate member (300).

(1-2-3) First Spacer Member

As illustrated in Fig. 5(a), the first spacer member (112A) includes an arrangement portion (112A1), a corner portion (112A2), a pair of first frame portions (112A3), and a pair of second frame portions (112A4). The pair of first frame portions (112A3) extend along the third direction (V3) to be parallel to each other while being spaced apart from each other along the second direction (V2). The pair of second frame portions (112A4) extend along the second direction (V2) to be parallel to each other while being spaced apart from each other along the third direction (V3). The pair of first frame portions (112A3) and the pair of second frame portions (112A4) form a substantially rectangular frame, and the arrangement portion (112A1) is located on the inner side of the frame. The arrangement portion (112A1) is provided for arrangement of the first flow passage member (111A) and is a space extending along the first direction (V1) through the first spacer member (112A). The arrangement portion (112A1) is provided at a central portion of the first spacer member (112A). The corner portion (112A2) includes a first corner portion (112A21) to a fourth corner portion (112A24), which are provided one each at four corners of the first spacer member (112A). The concave portion (400) is formed between the corner portions (112A2) that are adjacent to each other. The first frame portions (112A3) and the second frame portions (112A4) are continuous with each other with the corner portions (112A2) interposed therebetween. The first flow passage member (111A) is attached to the first frame portions (112A3). A gap (Q1) is present between each of the second frame portions (112A4) and the first flow passage member (111A).

(1-2-4) Second Spacer Member

As illustrated in Fig. 5(b), the second spacer member (112B) includes an arrangement portion (112B1), a corner portion (112B2), a pair of third frame portions (112B3), and a pair of fourth frame portions (112B4). The pair of third frame portions (112B3) extend along the third direction (V3) to be parallel to each other while being spaced apart from each other along the second direction (V2). The pair of fourth frame portions (112B4) extend along the second direction (V2) to be parallel to each other while being spaced apart from each other along the third direction (V3). The pair of third frame portions (112B3) and the pair of fourth frame portions (112B4) form a substantially rectangular frame, and the arrangement portion (112B1) is located on the inner side of the frame. The arrangement portion (112B1) is provided for arrangement of the second flow passage member (111B) and is a space extending along the first direction (V1) through the second spacer member (112B). The arrangement portion (112B1) is provided at a central portion of the second spacer member (112B). The corner portion (112B2) includes a first corner portion (112B21) to a second corner portion (112B24), which are provided one each at four corners of the arrangement portion (112B1). The concave portion (400) is formed between the corner portions (112B2) that are adjacent to each other. The third frame portions (112B3) and the fourth frame portions (112B4) are continuous with each other with the corner portions (112B2) interposed therebetween. The second flow passage member (111B) is attached to the third frame portions (112B3). A gap (Q2) is present between each of the fourth frame portions (112B4) and the second flow passage member (111B).

(1-2-5) Partition Wall Member

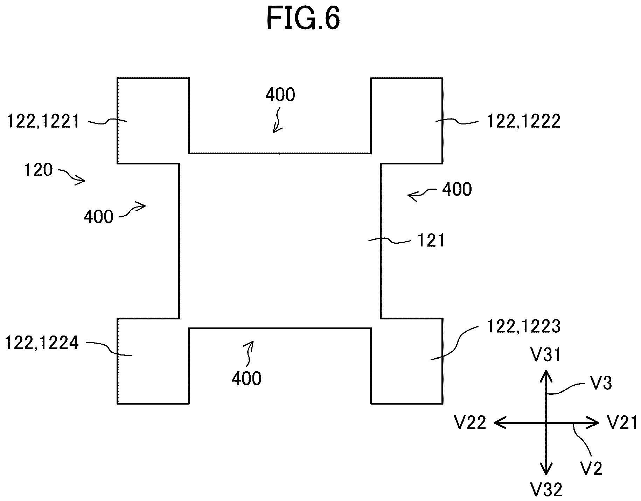

As illustrated in Fig. 6, the partition wall member (120) includes a facing portion (121) and a corner portion (122). The facing portion (121) faces the flow passage member (111). The facing portion (121) is provided at a central portion of the partition wall member (120). The corner portion (122) includes a first corner portion (1221) to a fourth corner portion (1224), which are provided one each at four corners of the facing portion (121). The concave portion (400) is formed between the corner portions (122) that are adjacent to each other.
An n-th corner portion (202n) of the first plate member (200), an n-th corner portion (302n) of the second plate member (300), an n-th corner portion (112A2n) of the first spacer member (112A), an n-th corner portion (112B2n) of the second spacer member (112B), and an n-th corner portion (122n) of the partition wall member (120) are disposed to be stacked on each other along the first direction (V1). The n is a natural number that is 1 or more and 4 or less.
With the gap (Q1) being formed between the first flow passage member (111A) illustrated in Fig. 5(a) and each of the pair of first frame portions (112A3), end portions (111C) of the first flow passage member (111A) on two sides in the third direction (V3) are each fitted into a groove (112a) formed on the pair of second frame portions (112A4) of the first spacer member (112A), and the first flow passage member (111A) is thereby attached to the first spacer member (112A). With the gap (Q2) being formed between the second flow passage member (111B) illustrated in Fig. 5(b) and each of the pair of fourth frame portions (112B4), end portions (111C) of the second flow passage member (111B) on two sides in the second direction (V2) are each fitted into the groove (112a) formed on the pair of third frame portions (112B3) of the second spacer member (112B), and the second flow passage member (111B) is thereby attached to the second spacer member (112B).

(1-3) Flow of Refrigerant

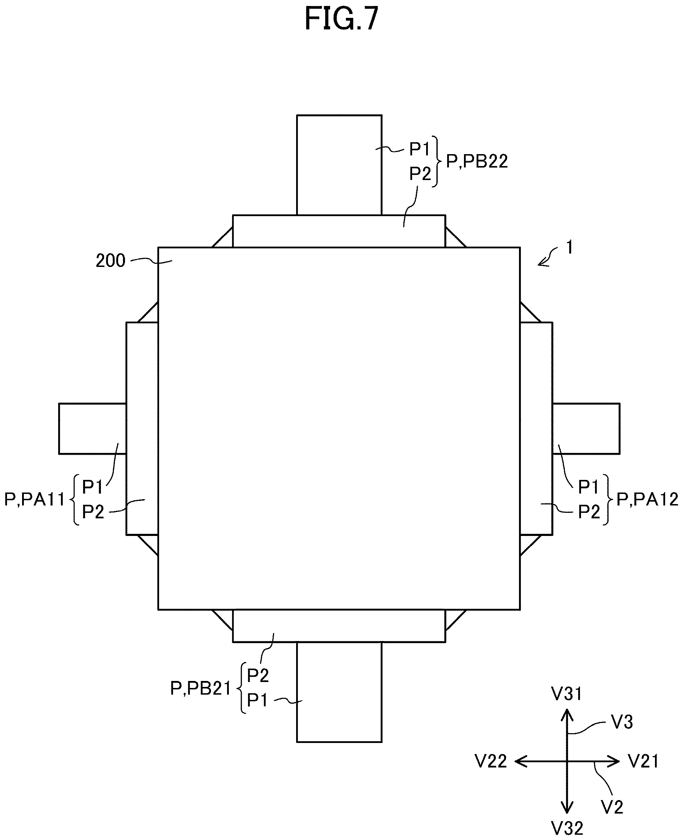

As illustrated in Fig. 7, the pipe member (P) provided in the heat exchanger (1) includes a pair of first pipe members (PA11 and PA12) disposed along the second direction (V2) and a pair of second pipe members (PB21 and PB22) disposed along the third direction (V3).

As illustrated in Fig. 7 and Fig. 8(a), the first refrigerant flows into the refrigerant pipe (P1) of the first pipe member (PA11) and is sent to the first flow passage member (111A) through the gap (Q1) after passing through the refrigerant pipe (P1). The first refrigerant sent to the first flow passage member (111A) is discharged from the heat exchanger (1) through the refrigerant pipe (P1) of the first pipe member (PA12) after being sent through the first flow passage (R1) of the first flow passage member (111A).

As illustrated in Fig. 7 and Fig. 8(b), the second refrigerant flows into the refrigerant pipe (P1) of the second pipe member (PA21) and is sent to the second flow passage member (111B) through the gap (Q2) after passing through the refrigerant pipe (P1). The second refrigerant sent to the second flow passage member (111B) is discharged from the heat exchanger (1) through the refrigerant pipe (P1) of the second pipe member (PA22) after being sent through the second flow passage (R2) of the second flow passage member (111B).

As illustrated in Fig. 5(a) and Fig. 5(b), the flow passage member (111) is supported by the spacer member (112). The groove (112a) is formed on the spacer member (112), the flow passage member (111) is fitted into (attached to) the groove (112a), and the flow passage member (111) is thereby positioned with respect to the spacer member (112). In the present embodiment, the partition wall member (120) includes a plurality of frame portions disposed around the flow passage member (111), the groove (112a) is formed on each of a pair of frame portions (112A4, 112B3) of the plurality of frame portions facing each other with the flow passage member (111) interposed therebetween, the flow passage member (111) is fitted into the groove (112a), and a gap (Q1, Q2) is provided between each of another pair of frame portions (112A3, 112B4) facing each other with the flow passage member (111) interposed therebetween and the flow passage member (111). In each of the pairs of frame portions (112A4 and 112B3), the groove (112a) has a shape in which a surface facing the flow passage member (111) is recessed. As illustrated in Fig. 8(a) and Fig. 8(b), a refrigerant is sent to the flow passage member (111) through one of the pair of gaps (Q1, Q2), and a refrigerant is sent to the outside of the flow passage member (111) through the other one of the gaps. Each of the plurality of partition wall members (120) is formed of one member in which the plurality of frame portions are connected into an annular form to surround the flow passage member (111).

(1-4) Diffusion Bonding

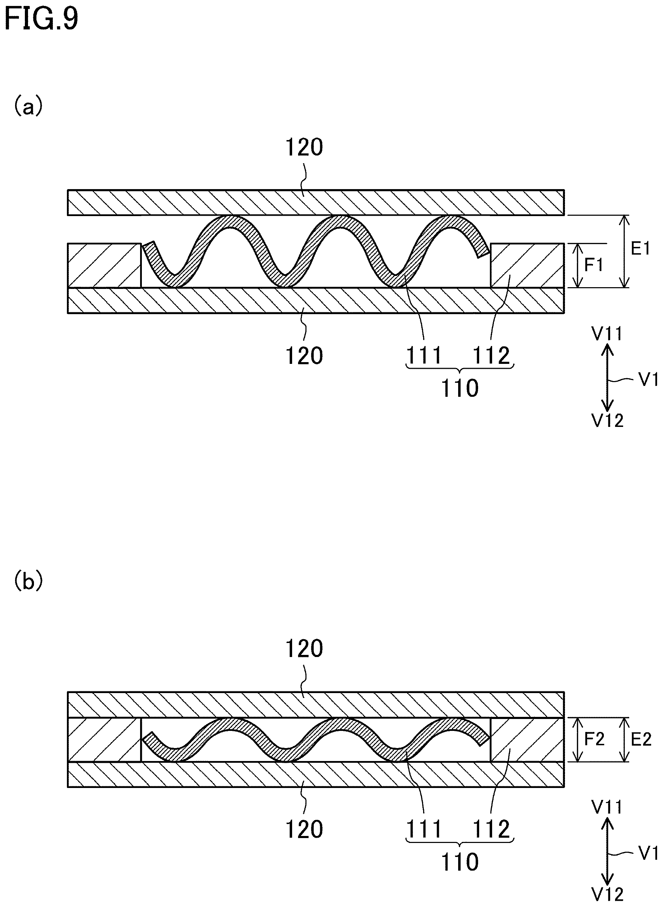

The flow passage member (111), the spacer member (112), the partition wall member (120), the first plate member (200), and the second plate member (300) are members that are separated from each other. In Fig. 9(a), the layer members (110) and the partition wall member (120) before diffusion bonding are illustrated. In Fig. 9(b), the layer members (110) and the partition wall member (120) after diffusion bonding are illustrated. As illustrated in Fig. 9(a) and Fig. 9(b), constituent members (the flow passage member (111), the spacer member (112), the partition wall member (120), the first plate member (200), and the second plate member (300)) of the heat exchanger (1) are bonded together by diffusion bonding, brazing, or the like. In the present embodiment, the flow passage member (111), the spacer member (112), and the partition wall member (120) are bonded together by solid phase diffusion bonding. Note that the flow passage member (111), the spacer member (112), and the partition wall member (120) may be bonded together by liquid phase diffusion bonding or brazing. Hereinafter, diffusion bonding in the first embodiment refers to solid phase diffusion bonding.

In the diffusion bonding, the constituent members of the heat exchanger (1) are bonded together by, while the constituent members of the heat exchanger (1) are heated, pressing the constituent members of the heat exchanger (1) along the first direction (V1) to thereby achieve metallic bond between bonded surfaces of the constituent members of the heat exchanger (1).

As illustrated in Fig. 9(a), at least one of the flow passage member (111) and the spacer member (112) is deformed by the diffusion bonding to reduce a dimensional difference in the first direction (V1) between the flow passage member (111) and the spacer member (112) that are adjacent to each other in a direction perpendicular to the first direction (V1).

In the present embodiment, the flow passage member (111) is deformed by the diffusion bonding to reduce the dimension of the flow passage member (111) in the first direction (V1). Before the diffusion bonding, a dimension E1 of the flow passage member (111) is larger than a dimension F1 of the spacer member (112) (E1 > F1) in the first direction (V1). As illustrated in Fig. 9(b), after the diffusion bonding, a dimension E2 of the flow passage member (111) is equal (or substantially equal) to a dimension F2 of the spacer member (112) (E2 ≈ F2 or E2 = F2) in the first direction (V1). In the present embodiment, the dimension F1 of the spacer member (112) before the diffusion bonding is substantially equal (or equal) to the dimension F2 of the spacer member (112) after the diffusion bonding (F1 ≈ F2 or F1 = F2) in the first direction (V1).

One of the flow passage member (111) and the spacer member (112) adjacent to each other in a direction perpendicular to the first direction (V1), the one having a larger dimension in the first direction (V1) than the other one, has lower rigidity. In the present embodiment, the flow passage member (111) has lower rigidity than the spacer member (112). Consequently, it is possible in the diffusion bonding to easily deform the flow passage member (111) and effectively reduce a dimensional difference in the first direction (V1) between the flow passage member (111) and the spacer member (112).

The surface pressure at the point of contact between the partition wall member (120) immediately after (immediately after deformation) the diffusion bonding (solid phase diffusion bonding) and the flow passage member (111) is 1 MPa or more and is preferably 5 MPa or more. Note that, when the flow passage member (111), the spacer member (112), and the partition wall member (120) are bonded together by liquid phase diffusion bonding, the surface pressure at the point of contact between the partition wall member (120) immediately after the liquid phase diffusion bonding and the flow passage member (111) may be 1 MPa or less.

(1-5) Dimensions Relating to Constituent Members of Heat Exchanger

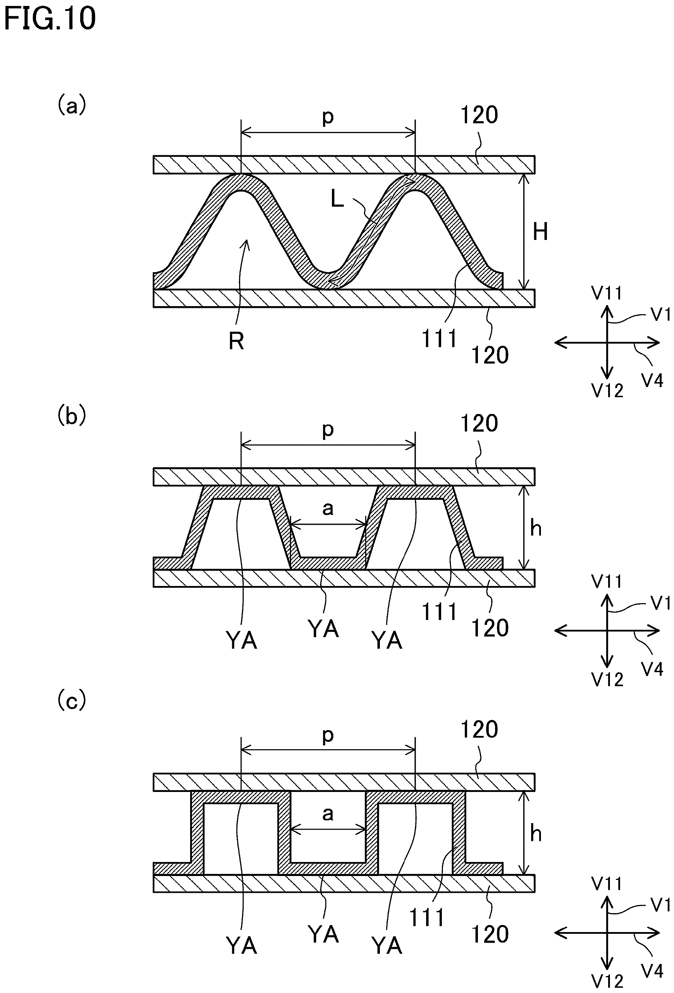

In Fig. 10(a), the laminate (100) and the partition wall member (120) before the diffusion bonding are illustrated. In Fig. 10(b), a first example of a state of the laminate (100) and the partition wall member (120) after the diffusion bonding is illustrated. In Fig. 10(c), a second example of a state of the laminate (100) and the partition wall member (120) after the diffusion bonding is illustrated.

Hereinafter, a direction perpendicular to the first direction (V1) may be referred to as a perpendicular direction (V4). When the flow passage member (111) illustrated in Fig. 10(a) to Fig. 10(c) is the first flow passage member (111A), the perpendicular direction (V4) is the third direction (V3) (see Fig. 8(b)). When the flow passage member (111) illustrated in Fig. 10(a) to Fig. 10(c) is the second flow passage member (111B), the perpendicular direction (V4) is the second direction (V2) (see Fig. 8(a)).

As illustrated in Fig. 10(b) and Fig. 10(c), the flow passage member (111) is bonded at a plurality of bonding portions (YA) to one partition wall member (120) by diffusion bonding, and the plurality of bonding portions (YA) are arranged along the perpendicular direction (V4) to be spaced from each other. After the diffusion bonding, the dimension of the bonding portions (YA) in the perpendicular direction (V4), the bonding portions (YA) being adjacent to each other, is denoted by P and the dimension of the flow passage member (111) in the first direction (V1) is denoted by h. In this case, it is preferable that the relationship of (2/5)P < h < (2/3)P or (2/5)h < P < (2/3)h be established.

In Fig. 10(a), the flow passage member (111) is formed such that a constant shape (unit shape) is repeatedly arranged along the perpendicular direction (V4). As illustrated in Fig. 10(a), before the diffusion bonding, the length of a half of the unit shape in a cross-sectional view (in a cross-sectional view perpendicular to a direction in which the flow passage (R) formed by the flow passage member (111) extends) is denoted by L and the dimension of the flow passage member (111) in the first direction (V1) is denoted by H. As illustrated in Fig. 10(b) and Fig. 10(c), after the diffusion bonding, the dimension of the flow passage member (111) in the first direction (V1) is denoted by h, the dimension of one bonding portion (YA) in the perpendicular direction (V4) is denoted by a, the dimension of the bonding portions (YA) in the perpendicular direction (V4), the bonding portions (YA) being adjacent to each other, is denoted by P, and it is assumed that $0 < a \le P/2$ is established. In this case, it is preferable that the relationship of Math. 1 below be established.

(Math. 1)

$$\Delta (H - h) > L - (P/2) - \sqrt{\{(L - 2a + P/2)(L - P/2)\}}$$

In the first direction (V1), the dimension H of the flow passage member (111) before the diffusion bonding is preferably 2 mm or less.

(1-6) Shape of Flow Passage Member

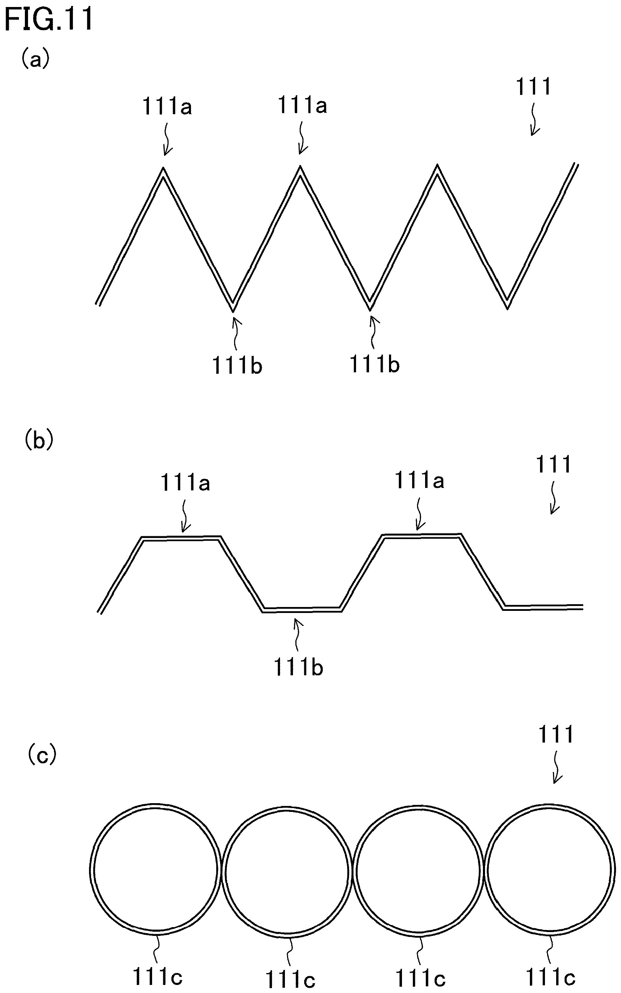

In the present embodiment, the flow passage member (111) has a sinusoidal shape (see Fig. 8(a) and Fig. 8(b)) in a cross-sectional view (when viewed in a direction in which a flow passage formed by the flow passage member (111) extends). However, the present invention is not limited thereto. As illustrated in Fig. 11(a) to Fig. 11(c), the flow passage member (111) may have a triangular shape, a trapezoidal shape, or a circular shape in a cross-sectional view (when viewed in a direction in which the flow passage extends). As illustrated in Fig. 11(a), the triangular shape is a shape in which each of the mountain portion (111a) and the valley portion (111b) of the flow passage member (111) is bent at one portion. As illustrated in Fig. 11(b), the trapezoidal shape is a shape in which each of the mountain portion (111a) and the valley portion (111b) of the flow passage member (111) is bent at two portions. As illustrated in Fig. 11(c), the circular shape is a shape in which a plurality of cylindrical members (111c) are arranged along the perpendicular direction (V4). In this case, the cylindrical members (111c) adjacent to each other may be coupled to each other, or the cylindrical members (111c) adjacent to each other may be separated from each other.

(1-7) Effects

The flow passage member (111), the spacer member (112), and the partition wall member (120) are bonded together as described above. Consequently, even when a dimensional difference (height difference) in the first direction (V1) is present between the flow passage member (111) and the spacer member (112) that are adjacent to each other in a direction perpendicular to the first direction (V1) before bonding, it is possible to reduce the height difference by deforming at least one of the flow passage member (111) and the spacer member (112) adjacent to each other in the direction perpendicular to the first direction (V1) by using a pressure (pressurization by pressing in the bonding) from the partition wall member (120) in the bonding. As a result, it is possible to effectively bond the constituent members of the heat exchanger (1) together. Further, by effectively bonding the constituent members of the heat exchanger (1), it is possible to suppress an increase in the defect rate of the heat exchanger (1).

In addition, since a height difference between the flow passage member (111) and the spacer member (112) adjacent to each other can be easily reduced by the diffusion bonding, it is possible to provide tolerance in the precision of the constituent members of the heat exchanger (1) and thus is possible to easily manufacture the heat exchanger (1).

In addition, since the height difference between the flow passage member (111) and the spacer member (112) adjacent to each other can be reduced by the diffusion bonding, it is not necessary to perform processing of the shapes of the flow passage member (111) and the spacer member (112) in order to match the heights of the flow passage member (111) and the spacer member (112), and it is thus possible to suppress costs for the processing. As a result, it is possible to suppress an increase in the manufacturing costs of the heat exchanger (1).

Further, the constituent members of the heat exchanger (1) can be made of stainless steel, which is a high-strength material, and leakage of a refrigerant from the heat exchanger (1) can be effectively avoided. As an alternative method of diffusion bonding, there is brazing using copper as a brazing material. Copper is, however, inferior in strength to stainless steel. In contrast, by making the constituent members of the heat exchanger (1) with stainless steel and bonding the constituent members together by diffusion bonding, it is possible to effectively ensure the strength of bonding portions of the constituent members.

(1-8) Modifications of Heat Exchanger

Regarding modifications of the heat exchanger (1), differences from the heat exchanger (1) illustrated in Fig. 1 to Fig. 8 will be described mainly.

A modification of the heat exchanger (1) includes the laminate (100), the first plate member (200), and the second plate member (300). The laminate (100) includes a plurality of layer members (110) and the partition wall member (120). Each of the plurality of layer members (110) includes the flow passage member (111) and the spacer member (112).

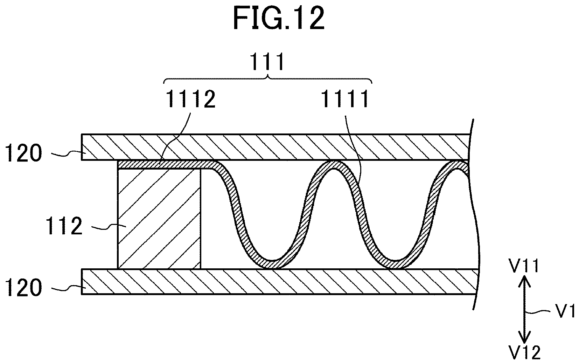

Fig. 12 is a partial cross-sectional view illustrating a modification of the heat exchanger (1). As illustrated in Fig. 12, each of a plurality of the flow passage members (111) includes a first portion (1111) and a second portion (1112). The first portion (1111) is disposed on a side of the spacer member (112) in a direction perpendicular to the first direction (V1). The second portion (1112) is sandwiched between the spacer member (112) and the partition wall member (120). The second portion (1112) may be located on the one side (V11) in the first direction (V1) or on the other side (V12) in the first direction (V1) with respect to the spacer member (112).

The flow passage member (111), the spacer member (112), the partition wall member (120), the first plate member (200), and the second plate member (300) are members that are separated from each other. In a modification of the heat exchanger (1), constituent members are bonded together by diffusion bonding.

At least one of the flow passage member (111) and the spacer member (112) is deformed by the diffusion bonding to reduce a dimensional difference in the first direction (V1) between a first member (the first portion (1111) of the flow passage member (111)) and a second member (the spacer member (112) and the second portion (1112) of the flow passage member (111)) that are adjacent to each other in a direction perpendicular to the first direction (V1).

In a modification, the flow passage member (111) is deformed by the diffusion bonding to reduce the dimension of the flow passage member (111) in the first direction (V1). In a modification, the surface pressure at the point of contact between the partition wall member (120) immediately after (immediately after deformation) the diffusion bonding (solid phase diffusion bonding) and the flow passage member (111) is 1 MPa or more and is preferably 5 MPa or more. Note that, when the flow passage member (111), the spacer member (112), and the partition wall member (120) are bonded together by liquid phase diffusion bonding, the surface pressure at the point of contact between the partition wall member (120) immediately after the liquid phase diffusion bonding and the flow passage member (111) may be 1 MPa or less.

In a modification of the heat exchanger (1), it is preferable that the relationship of $(2/5)P < h < (2/3)P$ or $(2/5)h < P < (2/3)h$ be established (see Fig. 10(b) and Fig. 10 (c)).

In a modification of the heat exchanger (1), it is preferable that the relationship of Math. 1 above be established (see Fig. 10(a) to Fig. 10(c)).

In a modification of the heat exchanger (1), the dimension H of the flow passage member (111) in the first direction (V1) before the diffusion bonding is preferably 2 mm or less.

(1-9) Modifications of Layer Member

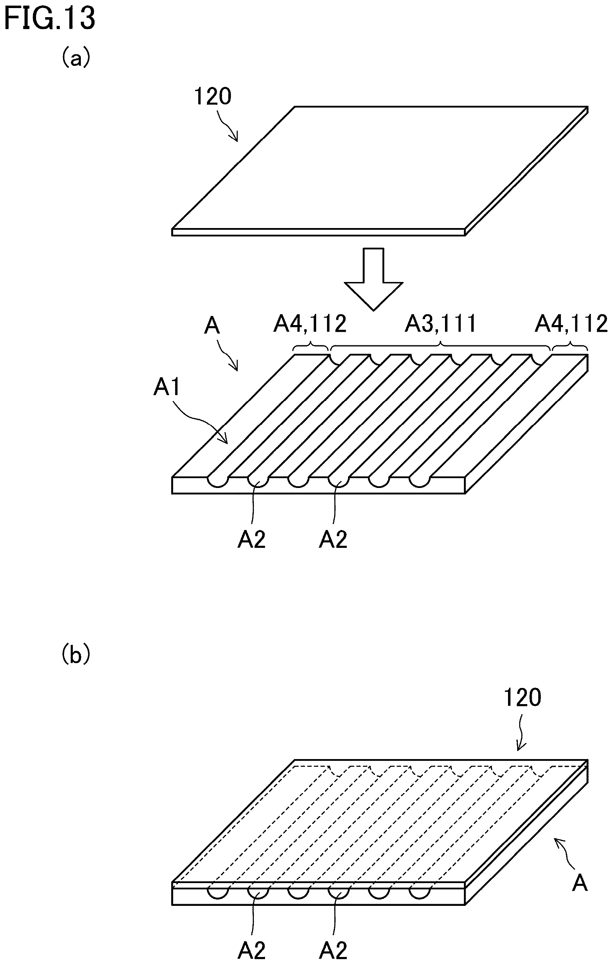

As illustrated in Fig. 13(a), a layer member (A), which is at least one layer member (110) of the plurality of layer members (110), may have a plurality of recesses (A2) formed in parallel on one surface (A1) of a flat plate by subjecting the one surface (A1) to processing, such as etching or cutting. In this case, in the layer member (A), a portion (A3) where the plurality of recesses (A2) are located corresponds to the flow passage member (111), and a portion (A4) located on each of two sides of the plurality of recesses (A2) corresponds to the spacer member (112). As illustrated in Fig. 13(a) and Fig. 13(b), the layer member (A) is bonded to the partition wall member (120) by diffusion bonding. A space surrounded by each of the recesses (A2) and the partition wall member (120) serves as a flow passage for a refrigerant.

(2) Second Embodiment

Regarding the heat exchanger (1) according to a second embodiment, differences from the heat exchanger (1) according to the first embodiment will be mainly described.

(2-1) Overall Configuration

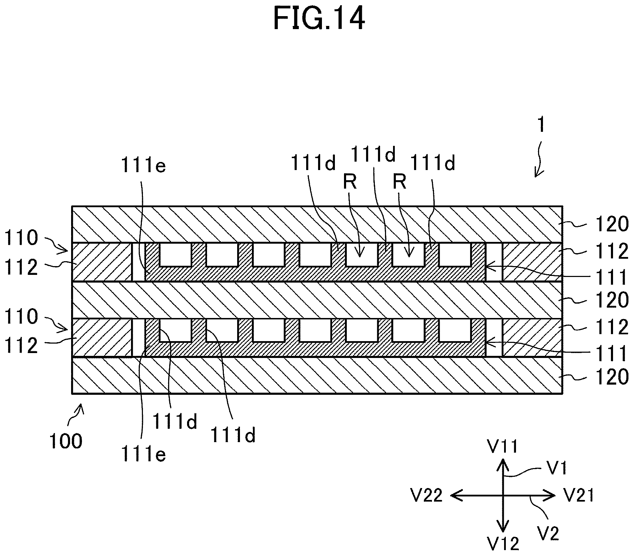

As illustrated in Fig. 14, the heat exchanger (1) according to the second embodiment includes the laminate (100). The laminate (100) includes a plurality of the layer members (110) and the partition wall member (120). The plurality of layer members (110) are stacked on each other along the first direction (V1). The partition wall member (120) is disposed between the layer members (110) that are adjacent to each other. Each of the plurality of layer members (110) includes the flow passage member (111) and the spacer member (112). The spacer member (112) is a member that is separated from the flow passage member (111). The spacer member (112) is disposed on a side of the flow passage member (111) in a direction perpendicular to the first direction (V1). In the present embodiment, the spacer member (112) is disposed on each of two sides of the flow passage member (111) in a direction (the second direction (V2)) perpendicular to the first direction (V1).

As illustrated in Fig. 14, the flow passage member (111) includes a plurality of projecting portions (IIId) and a floor portion (111e). The floor portion (IIIe) is bonded to the partition wall member (120) adjacent on the other side (V12) in the first direction (V1) to the floor portion (111e). Each of the projecting portions (IIId) has a bar shape extending along the first direction (V1). In the present embodiment, the thickness (a shape of a cross-section perpendicular to the first direction (V1)) of each of the projecting portions (IIId) is constant. The plurality of projecting portions (IIId) project from the floor portion (IIIe) toward the one side (V11) in the first direction (V1). The plurality of projecting portions (IIId) are arranged along the second direction (V2) to be spaced from each other. Each of the plurality of projecting portions (IIId) extends along the third direction (V3). In the second direction (V2), the dimension of each of the plurality of projecting portions (IIId) is smaller than the dimension of the floor portion (111e).

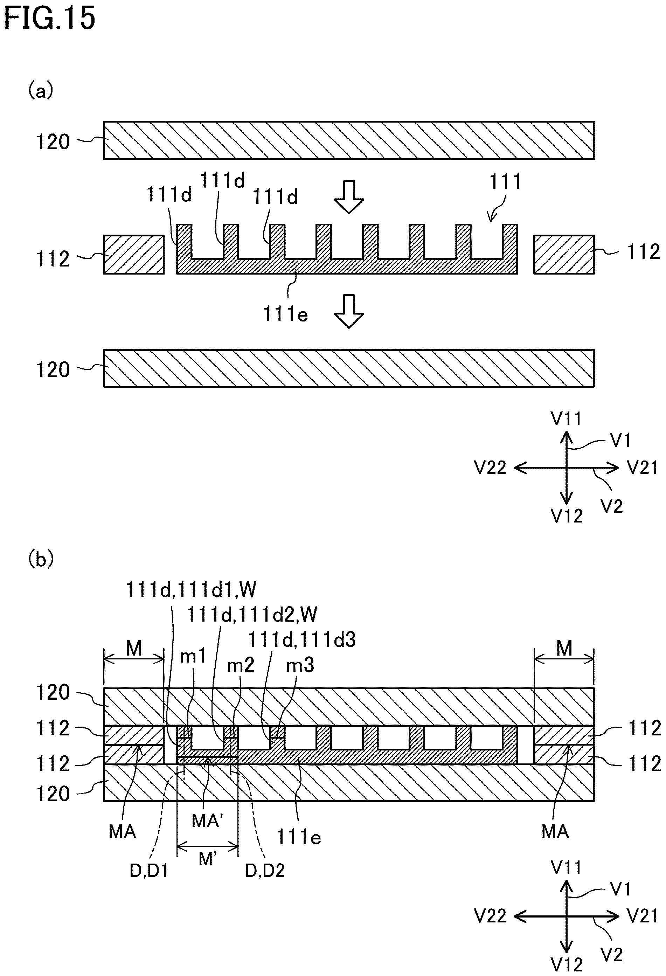

In the present embodiment, the plurality of projecting portions (IIId) include a first projecting portion (111d1), a second projecting portion (111d2), a third projecting portion (111d3), and the like (see Fig. 15(b)). The area of a cross-section of the first projecting portion (111d1) perpendicular to the first direction (V1) is an area (m1), the area of a cross-section of the second projecting portion (111d2) perpendicular to the first direction (V1) is an area (m2), and the area of a cross-section of the third projecting portion (111d3) perpendicular to the first direction (V1) is an area (m3).

The plurality of projecting portions (IIId) are bonded to the partition wall member (120) that is adjacent on the one side (V11) in the first direction (V1) to the plurality of projecting portions (IIId). The flow passage (R) for a refrigerant is formed among the projecting portions (IIId) adjacent to each other in the second direction (V2), the floor portion (IIIe), and the partition wall member (120) that is adjacent on the one side (V11) in the first direction (V1) to the projecting portions (IIId). The flow passage (R) extends along the third direction (V3). In the present embodiment, the flow passage member (111) forms a plurality of the flow passages (R) in parallel by three or more projecting portions (IIId) arranged to be spaced from each other.

Fig. 15(a) is a cross-sectional view illustrating the flow passage member (111), the spacer member (112), and the partition wall member (120) before bonding of the partition wall member (120) to the flow passage member (111) and the spacer member (112). Fig. 15(b) is a cross-sectional view illustrating the flow passage member (111), the spacer member (112), and the partition wall member (120) after bonding of the partition wall member (120) to the flow passage member (111) and the spacer member (112). As illustrated in Fig. 15(a), before the bonding (in a state in which no external force acts on the flow passage member (111) and the spacer member (112)), the dimension of each of portions of the flow passage member (111) where the projecting portions (llld) are disposed is larger than or equal to the dimension of the spacer member (112) in the first direction (V1). As illustrated in Fig. 15(a) and Fig. 15(b), the flow passage member (111), the spacer member (112), and the partition wall member (120) are bonded together by diffusion bonding or brazing. The diffusion bonding may be either one of solid phase diffusion bonding and liquid phase diffusion bonding. As a result, the heat exchanger (1) is manufactured.

(2-2) Young's Modulus

An apparent Young's modulus $G_f$ of the flow passage member (111) is smaller than a Young's modulus $G_s$ of the spacer member (112) ($G_f < G_s$). The Young's modulus $G_s$ of the spacer member (112) will be described below.
The Young's modulus $G_s$ of the spacer member (112) is the ratio of a sinking deformation rate (U/T) of the spacer member (112) to a load (S/2M) applied to the spacer member (112) in a unit area in the first direction (V1). The Young's modulus $G_s$ of the spacer member (112) is expressed by Math. 2 below.

[Math. 2]

$$G_s = ST/2MU$$

As illustrated in Fig. 15(b), a pressing force S in Math. 2 is a force (a load applied in a cross-sectional area (M) of the spacer member (112)) that presses the spacer member (112) along the first direction (V1). The cross-sectional area (M) is an area of a cross-section (MA) of the spacer member (112) perpendicular to the first direction (V1). The dimension T in Math. 2 is a maximum dimension (an initial height of the spacer member (112)) of the spacer member (112) in the first direction (V1) in a state (state before bonding of the partition wall member (120) to the spacer member (112)) in which no external force acts on the spacer member (112). In Math 2, U is a deformation amount (sinking deformation amount or contraction amount) of the spacer member (112) in the first direction (V1) when the pressing force S acts on the spacer member (112).

(2-3) Apparent Young's Modulus

The apparent Young's modulus $G_f$ of the flow passage member (111) is a ratio of a sinking deformation rate (u/t) of the flow passage member (111) to a load (S/$\Sigma m_i$) applied to the plurality of projecting portions (llld) in a unit area in the first direction (V1). The apparent Young's modulus $G_f$ of the flow passage member (111) is expressed by Math. 3 below.

[Math. 3]

$$G_f = St/\Sigma m_i \cdot u$$

As illustrated in Fig. 15(b), the pressing force S in Math. 3 is a force that presses the flow passage member (111) in the first direction (V1).
The dimension t in Math. 3 is a maximum dimension (an initial height of the flow passage member (111)) of the flow passage member (111) in the first direction (V1) in a state (a state before bonding of the partition wall member (120) to the flow passage member (111)) in which no external force acts on the flow passage member (111).
In Math 3, u is a deformation amount (sinking deformation amount or contraction amount) of the flow passage member (111) in the first direction (V1) when the pressing force S acts on the flow passage member (111).
In Math. 3, $\Sigma m_i$ is a sum total of average values of the areas of cross-sections of the plurality of projecting portions (llld) perpendicular to the first direction (V1) ($\Sigma m_i$ = an average value of areas (m1) of cross-sections of the first projecting portion (111d1) perpendicular to the first direction (V1) + an average value of areas (m2) of cross-sections of the second projecting portion (111d2) perpendicular to the first direction (V1) + an average value of areas (m3) of cross-sections of the third projecting portion (111d3) perpendicular to the first direction (V1) + ...).
As illustrated in Fig. 15(b), in a cross-sectional view (in a cross-sectional view perpendicular to the direction in which the flow passage (R) formed by the flow passage member (111) extends), imaginary lines (D) extending along the first direction (V1) from two or more projecting portions (llld) corresponding thereto intersect a cross-section (MA') of the flow passage member (111) having a cross-sectional area (M'). The cross-sectional area (M') of the flow passage member (111) corresponds to the cross-sectional area (M) of the spacer member (112), and the cross-section (MA') of the flow passage member (111) corresponds to the cross-section (MA) of the spacer member (112). The cross-section (MA') of the flow passage member (111) is, among cross-sections of the flow passage member (111) perpendicular to the first direction (V1), a cross-section of the floor portion (IIIe) having a dimension identical to the dimension of the cross-section (MA) of the spacer member (112). In the present embodiment, in a cross-sectional view, the imaginary line (D, D1) extending along the first direction (V1) from the first projecting portion (111d1) and the imaginary line (D, D2) extending along the first direction (V1) from the second projecting portion (111d2) intersect the cross-section (MA') of the flow passage member (111). Hereinafter, the projecting portions (IIId) each having the imaginary line (D) intersecting the cross-section (MA') of the flow passage member (111) in a cross-sectional view may be referred to as intersection projecting portions (W). The plurality of projecting portions (IIId) of the flow passage member (111) include two or more intersection projecting portions (W).

(2-4) Effects

As described above, the apparent Young's modulus $G_f$ of the flow passage member (111) is smaller than the Young's modulus $G_s$ of the spacer member (112) ($G_f < G_s$). Consequently, as illustrated in Fig. 15(a) and Fig. 15(b), the flow passage member (111) and the spacer member (112) can be bonded to the partition wall member (120) such that a dimensional difference in the first direction (V1) between the flow passage member (111) and the spacer member (112) is reduced. In other words, although the maximum dimension of the flow passage member (111) is larger than the maximum dimension of the spacer member (112) in the first direction (V1) before bonding, the flow passage member (111) is deformed by bonding such that the dimension of the flow passage member (111) is reduced in the first direction (V1). Thus, the flow passage member (111) is deformed by bonding to reduce a dimensional difference in the first direction (V1) between the flow passage member (111) and the spacer member (112) that are adjacent to each other in a direction perpendicular to the first direction (V1). The flow passage member (111) is deformed by a pressure (pressurization by a press in bonding) from the partition wall member (120) in bonding. Consequently, after bonding, the dimension of the flow passage member (111) is made to be identical (or substantially identical) to the dimension of the spacer member (112) in the first direction (V1). As a result, it is possible to suppress occurrence of a defect in bonding of the flow passage member (111) and the spacer member (112) to the partition wall member (120).
In addition, it is possible to improve an uneven contact state between the partition wall member (120) and the plurality of projecting portions (IIId) of the flow passage member (111) by reducing the rigidity of the flow passage member (111), and it is thus possible to reduce defects in bonding between the partition wall member (120) and the plurality of projecting portions (IIId) of the flow passage member (111) and, as a result, possible to improve the endurance reliability of the heat exchanger (1).
In addition, in the present embodiment, the plurality of projecting portions (IIId) are thinned such that the flow passage (R) for a refrigerant is formed between the projecting portions (IIId) adjacent to each other. Consequently, it is possible to reduce the areas of cross-sections of the plurality of projecting portions (IIId) perpendicular to the first direction (V1), and it is thus possible to reduce the apparent Young's modulus $G_f$ of the flow passage member (111) to make a state in which the apparent Young's modulus $G_f$ of the flow passage member (111) < the Young's modulus $G_s$ of the spacer member (112).

(2-5) First Modification

The flow passage member (111) may be made of a foamed material. The foamed material is, for example, foam metal (shooting metal made of aluminum). Consequently, by forming the flow passage member (111) with a foamed material, it is possible to reduce the apparent Young's modulus $G_f$ of the flow passage member (111) to make a state in which the apparent Young's modulus $G_f$ of the flow passage member (111) < the Young's modulus $G_s$ of the spacer member (112).

(2-6) Second Modification

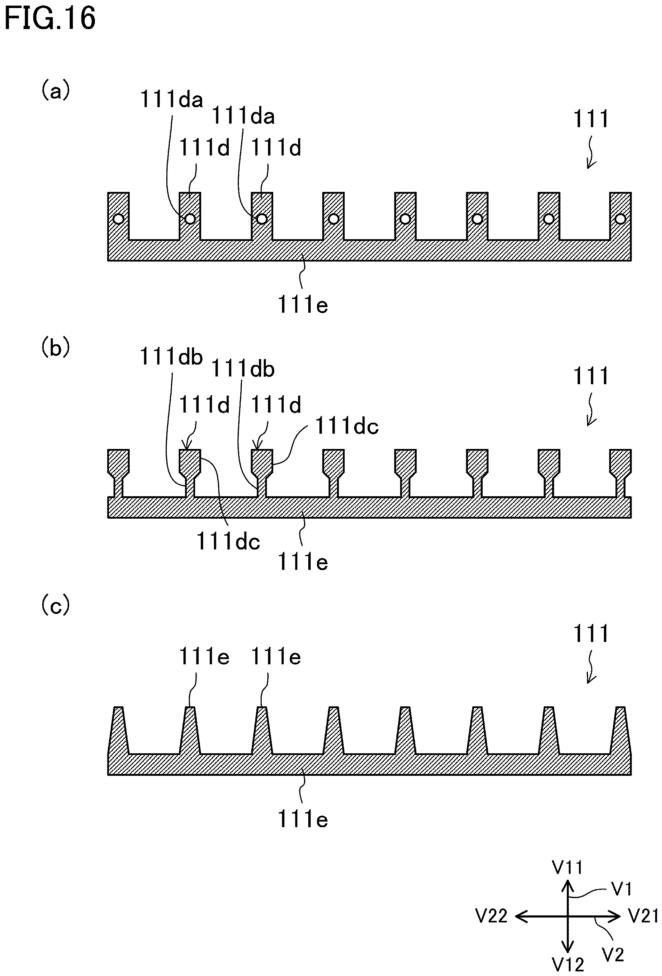

As illustrated in Fig. 16(a), the flow passage member (111) may have a hole (111da). The hole (IIIda) may be a bottomed hole or may be a hole extending through the flow passage member (111). In the present embodiment, the hole (IIIda) is formed in the projecting portion (IIId) (at least one projecting portion (IIId) of the plurality of projecting portions (111d)). Consequently, by forming the hole (IIIda) in the flow passage member (111), it is possible to reduce the apparent Young's modulus $G_f$ of the flow passage member (111) to make a state in which the apparent Young's modulus $G_f$ of the flow passage member (111) < the Young's modulus $G_s$ of the spacer member (112).

(2-7) Third Modification

As illustrated in Fig. 16(b), a portion of the projecting portion (IIId) (at least one projecting portion (IIId) of the plurality of projecting portions (111d)) may be thinner than another portion of the projecting portion (IIId). In the present

embodiment, a base end portion (111db) of the projecting portion (IIId) is thinner than a tip end portion (111dc) of the projecting portion (IIId). Consequently, by thinning a portion of the flow passage member (111), it is possible to reduce the apparent Young's modulus $G_f$ of the flow passage member (111).

(2-8) Fourth Modification

As illustrated in Fig. 16(c), the areas of cross-sections of the projecting portion (IIId) (at least one projecting portion (IIId) of the plurality of projecting portions (111d)) perpendicular to the first direction (V1) may be varied. In the present embodiment, cross-sections of the projecting portion (IIId) perpendicular to the first direction (V1) become smaller toward the one side (V11) in the first direction (V1). In other words, the projecting portion (IIId) becomes thinner toward the one side (V11) in the first direction (V1). Consequently, by varying the thickness of the projecting portion (IIId) in the first direction (V1), it is possible to reduce the apparent Young's modulus $G_f$ of the flow passage member (111).

(2-9) Fifth Modification

The material of the flow passage member (111) may be different from the material of the spacer member (112). For example, the material of the flow passage member (111) is an aluminum alloy containing pure aluminum, and the material of the spacer member (112) is a steel-based material containing pure iron and SUS. Note that the material of the flow passage member (111) may be a magnesium alloy containing pure magnesium while the material of the spacer member (112) is a steel-based material containing pure iron and SUS. In addition, the material of the flow passage member (111) may be a titanium alloy containing pure titanium while the material of the spacer member (112) is a steel-based material containing pure iron and SUS. In addition, the material of the flow passage member (111) may be a copper alloy containing pure copper while the material of the spacer member (112) is a steel-based material containing pure iron and SUS. In addition, the material of the flow passage member (111) may be an aluminum alloy containing pure aluminum while the material of the spacer member (112) is a copper alloy containing pure copper. In addition, the material of the flow passage member (111) may be an aluminum alloy (about 72 GPa) containing pure aluminum while the material of the spacer member (112) is a titanium alloy (about 106 GPa) containing pure titanium. In addition, the material of the flow passage member (111) may be a magnesium alloy (about 40 GPa) containing pure magnesium while the material of the spacer member (112) is a titanium alloy (about 106 GPa) containing pure titanium. In addition, the material of the flow passage member (111) may be a magnesium alloy (about 40 GPa) containing pure magnesium while the material of the spacer member (112) is a copper alloy (about 117 GPa) containing pure copper. Consequently, it is possible to form the flow passage member (111) and the spacer member (112) with materials that are different from each other to reduce the apparent Young's modulus $G_f$ of the flow passage member (111), in other words, to make a state in which the apparent Young's modulus $G_f$ of the flow passage member (111) < the Young's modulus $G_s$ of the spacer member (112). The above combination is one example, and the combination of the material of the flow passage member (111) and the material of the spacer member (112) is not limited to the above combination as long as the state in which the apparent Young's modulus $G_f$ of the flow passage member (111) < the Young's modulus $G_s$ of the spacer member (112) is established by the combination.

Even when the projecting portions (IIId) are configured as in the first to fifth modifications (for example, even when the areas of cross-sections of the projecting portions (IIId) perpendicular to the first direction (V1) are not constant), the apparent Young's modulus $G_f$ of the flow passage member (111) is smaller than the Young's modulus $G_s$ of the spacer member (112) ($G_f < G_s$).

While embodiments and modifications have been described above, it should be understood that various changes in forms and details are possible without deviating from the gist and the scope of the claims. In addition, the embodiment and the modifications described above and other embodiments may be combined together or replaced, as appropriate, as long as functions to which the present disclosure is directed are involved.

The terms such as "first", "second", "third", ... used above are used for distinction between words to which these terms are given, and the terms are not intended to limit the number or order of the words.

Industrial Applicability

As described above, the present disclosure is useful for a heat exchanger and a method of manufacturing a heat exchanger.

Reference Signs List

1    heat exchanger

110     layer member
111     flow passage member
112     spacer member
120     partition wall member
V1      first direction (stacking direction)

**Claims**

1. A method of manufacturing a heat exchanger,

   the heat exchanger including

   a plurality of layer members (110) stacked on each other, and
   a partition wall member (120) disposed between the layer members (110) that are adjacent to each other,

   the plurality of layer members (110) each including

   a flow passage member (111) configured to form a flow passage for a refrigerant, and
   a spacer member (112) disposed on a side of the flow passage member (111) in a perpendicular direction perpendicular to a stacking direction (V1) of the layer members (110),

   the method comprising:

   a bonding step of bonding the flow passage member (111), the spacer member (112), and the partition wall member (120) together, wherein
   at least one of the flow passage member (111) and the spacer member (112) is deformed by the bonding to reduce a dimensional difference in the stacking direction (V1) between the flow passage member (111) and the spacer member (112) that are adjacent to each other in the perpendicular direction.

2. The method of manufacturing the heat exchanger according to claim 1, wherein
   in the bonding step, the flow passage member (111), the spacer member (112), and the partition wall member (120) are bonded together by diffusion bonding.

3. The method of manufacturing the heat exchanger according to claim 2, wherein

   a dimension of the flow passage member (111) is larger than a dimension of the spacer member (112) in the stacking direction (V1) before the diffusion bonding, and
   the flow passage member (111) is deformed by the diffusion bonding to reduce a dimension of the flow passage member (111) in the stacking direction (V1).

4. The method of manufacturing the heat exchanger according to claim 2 or claim 3, wherein
   a surface pressure at a point of contact between the partition wall member (120) immediately after the diffusion bonding and the flow passage member (111) is 1 MPa or more.

5. The method of manufacturing the heat exchanger according to any one of claim 2 to claim 4, wherein
   the flow passage member (111) has a triangular shape, a trapezoidal shape, a circular shape, or a sinusoidal shape in a cross-sectional view and is deformed by being pressurized in the diffusion bonding.

6. The method of manufacturing the heat exchanger according to any one of claim 2 to claim 5, wherein

   the flow passage member (111) is bonded at a plurality of bonding portions (YA) to the partition wall member (120) that is one partition wall member by the diffusion bonding, and the plurality of bonding portions (YA) are arranged along the perpendicular direction to be spaced from each other, and
   when, after the diffusion bonding, a dimension of the bonding portions (YA) in the perpendicular direction, the bonding portions (YA) being adjacent to each other, is P and a dimension of the flow passage member (111) in the stacking direction (V1) is h, a relationship of $(2/5)P < h < (2/3)P$ or $(2/5)h < P < (2/3)h$ is established.

7. The method of manufacturing the heat exchanger according to any one of claim 2 to claim 6, wherein

the flow passage member (111) is formed such that a constant unit shape is repeatedly arranged along the perpendicular direction,
the flow passage member (111) is bonded at a plurality of bonding portions (YA) to the partition wall member (120) that is one partition wall member by the diffusion bonding, and the plurality of bonding portions (YA) are arranged along the perpendicular direction to be spaced from each other,
when, before the diffusion bonding, a length of a half of the unit shape in a cross-sectional view of a flow passage (R) formed by the flow passage member (111) is L and a dimension of the flow passage member (111) in the stacking direction (V1) is H, and
when, after the diffusion bonding, a dimension of the flow passage member (111) in the stacking direction (V1) is h, a dimension of each one of the bonding portions (YA) in the perpendicular direction is a, a dimension of the bonding portions (YA) in the perpendicular direction, the bonding portions (YA) being adjacent to each other, is P, and $0 < a \leq P/2$ is established,
a difference $\Delta$ (H - h) between the dimension H of the flow passage member (111) in the stacking direction (V1) before the diffusion bonding and the dimension h of the flow passage member (111) in the stacking direction (V1) after the diffusion bonding establishes a relationship of Math. 1 below.

(Math. 1)

$$\Delta (H - h) > L - (P/2) - \sqrt{\{(L - 2a + P/2)(L - P/2)\}}$$

8. A method of manufacturing a heat exchanger,

the heat exchanger including

a plurality of layer members (110) stacked on each other, and
a partition wall member (120) disposed between the layer members (110) that are adjacent to each other,

the plurality of layer members (110) each including

a flow passage member (111) configured to form a flow passage for a refrigerant, and
a spacer member (112),

a plurality of the flow passage members (111) each including

a first portion (1111) disposed on a side of the spacer member (112) in a perpendicular direction perpendicular to a stacking direction (V1) of the layer members (110), and
a second portion (1112) sandwiched between the spacer member (112) and the partition wall member (120),

the method comprising:

a step of bonding the flow passage member (111), the spacer member (112), and the partition wall member (120) together, wherein
at least one of the flow passage member (111) and the spacer member (112) is deformed by the bonding to reduce a dimensional difference in the stacking direction (V1) between a first member and a second member that are adjacent to each other in the perpendicular direction,
the first member corresponds to the first portion (1111) of the flow passage member (111), and
the second member corresponds to the spacer member (112) and the second portion (1112) of the flow passage member (111).

9. The method of manufacturing the heat exchanger according to any one of claim 1 to claim 8, wherein the refrigerant contains propane.

10. The method of manufacturing the heat exchanger according to any one of claim 2 to claim 8, wherein a dimension of the flow passage member (111) in the stacking direction (V1) before the diffusion bonding is 2 mm or less.

11. The method of manufacturing the heat exchanger according to any one of claim 1 to claim 3, wherein

an apparent Young's modulus of the flow passage member (111) is smaller than a Young's modulus of the spacer member (112) .

12. The method of manufacturing the heat exchanger according to any one of claim 1 to claim 3 and claim 11, wherein the flow passage member (111) is made of a foamed material.

13. The method of manufacturing the heat exchanger according to any one of claim 1 to claim 3, claim 11, and claim 12, wherein

the flow passage member (111) includes a floor portion (IIIe) and a projecting portion (IIId) that projects from the floor portion (IIIe), and
a dimension of the projecting portion (IIId) is smaller than a dimension of the floor portion (IIIe) in the perpendicular direction.

14. The method of manufacturing the heat exchanger according to any one of claim 1 to claim 3 and claim 11 to claim 13, wherein
the flow passage member (111) has a hole (111da).

15. The method of manufacturing the heat exchanger according to claim 13, wherein
a portion of the projecting portion (IIId) is thinner than another portion of the projecting portion (IIId).

16. The method of manufacturing the heat exchanger according to claim 13, wherein
areas of cross-sections of the projecting portion (IIId) perpendicular to the stacking direction (V1) are varied.

17. The method of manufacturing the heat exchanger according to any one of claim 1 to claim 3 and claim 11 to claim 16, wherein
a material of the flow passage member (111) is different from a material of the spacer member (112).

18. The method of manufacturing the heat exchanger according to any one of claim 13, claim 15, and claim 16, wherein

a plurality of the projecting portions (IIId) project from the floor portion (IIIe) toward one side (V11) in the stacking direction (V1),
the floor portion (IIIe) is bonded to the partition wall member (120) adjacent on another side (V12) in the stacking direction (V1) to the floor portion (IIIe),
the plurality of projecting portions (IIId) are arranged along the perpendicular direction to be spaced from each other and are bonded to the partition wall member (120) adjacent on the one side (V11) in the stacking direction (V1) to the plurality of projecting portions (111d), and
a flow passage (R) for a refrigerant is formed among the projecting portions (IIId) adjacent to each other, the floor portion (IIIe), and the partition wall member (120) adjacent on the one side (V11) in the stacking direction (V1) to the projecting portions (IIId).

19. A heat exchanger manufactured by the method of manufacturing the heat exchanger according to any one of claim 1 to claim 18.

# FIG.1

# FIG.2

# FIG.3

# FIG.4

(a)

(b)

# FIG.5

(a)

(b)

# FIG.6

122,1221

400

122,1222

120

400

400

121

122,1224

400

122,1223

V31

V3

V22 ← → V21

V2

V32

# FIG.7

# FIG.8

(a)

(b)

# FIG.9

(a)

(b)

# FIG.10

(a)

(b)

(c)

## FIG.11

(a)

111a   111a   111

111b   111b

(b)

111a   111a   111

111b

(c)

111

111c   111c   111c   111c

# FIG.12

# FIG.13

(a)

(b)

# FIG.14

# FIG.15

(a)

(b)

# FIG.16

(a)

111da  111da
111d  111d
111

111e

(b)

111db  111db
111d  111d
111dc
111

111dc
111e

(c)

111e  111e
111

111e

V11
V22 ← → V21
V12
V1
V2

<table>
<tr><td colspan="2" align="center"><b>INTERNATIONAL SEARCH REPORT</b></td><td colspan="2">International application No.<br><b>PCT/JP2024/020759</b></td></tr>
</table>

| A. | CLASSIFICATION OF SUBJECT MATTER |
|---|---|

*F28F 3/08*(2006.01)i; *B23K 20/00*(2006.01)i; *F28D 9/02*(2006.01)i
FI: F28F3/08 301A; B23K20/00 310L; F28D9/02

According to International Patent Classification (IPC) or to both national classification and IPC

| B. | FIELDS SEARCHED |
|---|---|

Minimum documentation searched (classification system followed by classification symbols)

F28F3/08; B23K20/00; F28D9/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2005-069499 A (NISSAN MOTOR CO., LTD.) 17 March 2005 (2005-03-17) paragraphs [0010]-[0022], fig. 1-2 | 1-7, 9-11, 14, 17, 19 |
| A |  | 8, 12-13, 15-16, 18 |
| X | US 10046379 B1 (GREENWOOD, Robert) 14 August 2018 (2018-08-14) column 5, line 39 to column 6, line 3, fig. 3 | 1 |
| Y |  | 1-7, 9-11, 14, 17, 19 |
| A |  | 8, 12-13, 15-16, 18 |
| Y | US 2022/0143736 A1 (RAYTHEON COMPANY) 12 May 2022 (2022-05-12) paragraphs [0030]-[0032], [0039], fig. 1-2, 7 | 1-7, 9-11, 14, 17, 19 |
| Y | WO 2014/125566 A1 (MITSUBISHI ELECTRIC CORPORATION) 21 August 2014 (2014-08-21) paragraphs [0010]-[0014], [0027]-[0029], [0034], fig. 1-2, 9 | 9, 19 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance |  |  |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date |  |  |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed |  |  |

| Date of the actual completion of the international search | Date of mailing of the international search report |
|---|---|
| **12 July 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (July 2022)

**INTERNATIONAL SEARCH REPORT**

International application No.

**PCT/JP2024/020759**

**C.    DOCUMENTS CONSIDERED TO BE RELEVANT**

| Category* | Citation of document, with indication, where appropriate, of the relevant passages | Relevant to claim No. |
|---|---|---|
| Y | US 2020/0284530 A1 (XI'AN JIAOTONG UNIVERSITY) 10 September 2020 (2020-09-10) paragraphs [0047]-[0048], fig. 1-2, 7 | 14, 17, 19 |
| Y | JP 2015-036617 A (HAMILTON SUNDSTRAND CORPORATION) 23 February 2015 (2015-02-23) paragraphs [0002], [0008]-[0023], fig. 1-4 | 17, 19 |
| A | US 3517733 A (CLARKE CHAPMAN & CO. LIMITED) 30 June 1970 (1970-06-30) fig. 4 | 8 |
| A | JP 2003-522930 A (HONEYWELL INTERNATIONAL, INC.) 29 July 2003 (2003-07-29) fig. 2 | 8 |
| A | JP 2006-287158 A (NIKON CORPORATION) 19 October 2006 (2006-10-19) paragraph [0033], fig. 2 | 12 |
| A | JP 60-238688 A (MITSUBISHI ELECTRIC CORPORATION) 27 November 1985 (1985-11-27) p. 6, lower left column, lines 13-16, fig. 11-12 | 13, 15-16, 18 |
| A | JP 2005-528575 A (OXYCELL HOLDING B.V) 22 September 2005 (2005-09-22) entire text, all drawings | 1-19 |
| A | JP 2005-144523 A (MITSUBISHI HEAVY INDUSTRIES, LTD.) 09 June 2005 (2005-06-09) entire text, all drawings | 1-19 |
| A | JP 2003-185377 A (NISSAN MOTOR CO., LTD.) 03 July 2003 (2003-07-03) entire text, all drawings | 1-19 |

Form PCT/ISA/210 (second sheet) (July 2022)

International application No.

**PCT/JP2024/020759**

| Patent document cited in search report | | | Publication date (day/month/year) | Patent family member(s) | | | Publication date (day/month/year) |
|---|---|---|---|---|---|---|---|
| JP | 2005-069499 | A | 17 March 2005 | (Family: none) | | | |
| US | 10046379 | B1 | 14 August 2018 | (Family: none) | | | |
| US | 2022/0143736 | A1 | 12 May 2022 | US | 2023/0302567 | A1 | |
| | | | | WO | 2022/103917 | A1 | |
| WO | 2014/125566 | A1 | 21 August 2014 | (Family: none) | | | |
| US | 2020/0284530 | A1 | 10 September 2020 | CN | 109883238 | A | |
| JP | 2015-036617 | A | 23 February 2015 | US | 2015/0041105 | A1 | |
| | | | | paragraphs [0002], [0011]-[0026], fig. 1-4 | | | |
| | | | | US | 2017/0363369 | A1 | |
| | | | | EP | 2835612 | A1 | |
| US | 3517733 | A | 30 June 1970 | GB | 1205933 | A | |
| | | | | DE | 1601177 | A1 | |
| | | | | FR | 1551747 | A | |
| JP | 2003-522930 | A | 29 July 2003 | US | 6267175 | B1 | |
| | | | | fig. 2 | | | |
| | | | | WO | 2001/059386 | A1 | |
| | | | | EP | 1254346 | A1 | |
| | | | | DE | 60106567 | T2 | |
| JP | 2006-287158 | A | 19 October 2006 | (Family: none) | | | |
| JP | 60-238688 | A | 27 November 1985 | US | 4616695 | A | |
| | | | | column 8, lines 25-30, fig. 11-12 | | | |
| | | | | EP | 161396 | A2 | |
| | | | | CA | 1268755 | A | |
| | | | | KR | 10-1989-0003897 | B1 | |
| JP | 2005-528575 | A | 22 September 2005 | US | 2006/0162914 | A1 | |
| | | | | US | 2010/0243222 | A1 | |
| | | | | WO | 2003/091648 | A1 | |
| | | | | EP | 1523645 | A1 | |
| | | | | CN | 1662786 | A | |
| | | | | KR | 10-0947679 | B1 | |
| JP | 2005-144523 | A | 09 June 2005 | (Family: none) | | | |
| JP | 2003-185377 | A | 03 July 2003 | (Family: none) | | | |

Form PCT/ISA/210 (patent family annex) (July 2022)

**REFERENCES CITED IN THE DESCRIPTION**

**Patent documents cited in the description**

• JP 4063989 U